# EUROPEAN PATENT APPLICATION

(11) **EP 0 986 001 A2**
(43) Date of publication of application: **15.03.2000**
(21) Application number: 99306740.4
(22) Date of filing: 25.08.1999
(51) Int. Cl.: G06F 3/12

(54) **Method and apparatus for transmitting status and control information from a printer to a print system**

(30) Priority: 08.09.1998 US 149473
(71) Applicant: International Business Machines Corporation, Armonk, NY 10504 (US)
(72) Inventor: Debry, Robert K., c/o IBM United Kingdom ltd., Winchester, Hampshire SO21 2JN (GB); Hohensee, Reinhard H., c/o IBM United Kingdom Ltd., Winchester, Hampshire SO21 2JN (US); Stone, David E., c/o IBM United Kingdom Ltd., Winchester, Hampshire SO21 2JN (US); Roberts, Arthur R., c/o IBM United Kingdom Ltd., Winchester, Hampshire SO21 2JN (US)
(74) Representative: Litherland, David Peter

(57) **Abstract**

In a production printing system, a containerized data stream transmits print data objects, resource objects and command objects from a print server to a printer and a special reply container is used to convey information from the printer to the print system. The reply container includes sufficient information to indicate the status of page information at several printer locations and may include error messages generated by the page rendering apparatus.

In accordance with one embodiment, the reply object includes a dictionary which has entries keyed to various printer stations and a code which identifies the print job and page at the station when the reply container is generated.

## Description

This invention relates generally to high-speed, high-volume production printing systems which establish a bi-directional communication between the printing system and the printer, and, more particularly, to methods and apparatus for transmitting error, status and control information from the printer to the printing system.

Computer systems can generate output information in several ways, including video output and "hard copy" or printed output. Although more and more output consists of evanescent video screens, a large amount of data is still printed on paper and other permanent media. Therefore, there is a need for efficiently describing printed data and then printing a hard copy page from the print description. The printing is often performed by high-speed, high-volume printing systems which receive streams of encoded print data and utilize "intelligent" printers that can store commands and data. Such encoded print streams often include data for many printed pages. For example, a telephone company might print all of its telephone bills for a specified week with a single print stream. Each page in the print stream may be a telephone bill for a particular customer.

There are several well-known prior art encoding systems which have been designed to efficiently accomplish different objectives. Generally, a print data stream is encoded by means of a page description language which describes the format of each page. There are several conventional page description languages. One of these is called POSTSCRIPT® which is a print document description language which has been developed by the Adobe Corporation, San Jose, California. A POSTSCRIPT® encoded document includes a file containing page description commands or "operators." The POSTSCRIPT® operators describe how each page in the document is composed. A single POSTSCRIPT® file can generate a multi-page document because each page is composed according to the operators in the file.

One problem with documents described using POSTSCRIPT® is that it is not possible to examine a POSTSCRIPT® encoded document and ascertain where a particular page begins and ends without starting at the beginning of the document and calculating where each page break occurs. Therefore, documents encoded in the POSTSCRIPT® language are difficult to view on a display screen because the pages cannot be displayed in a random order. Further, if an error occurs during printing, it may be difficult to restart the printer at any place except the beginning of the document. This inability to restart and reposition the print stream can be a major problem in a production printing system where each print run can be thousands of pages.

In order to overcome some of the difficulties with viewing, another page description language was developed by the Adobe Corporation called the Portable Document Format (PDF) language. PDF is a file format which describes a group of pages to be viewed and uses graphic operators which are similar to POSTSCRIPT® operators to describe the page format. The PDF format was originally designed to view documents and the Adobe Corporation distributes a product which converts printable POSTSCRIPT® files into PDF format to allow the files to be efficiently viewed.

A PDF file actually defines single pages that can be viewed and printed separately. A PDF file is constructed with a header, a trailer, a cross reference table and a body. Page objects containing information for each page are located inside the body, in random order, and resource objects containing resource information are also located inside the body. The trailer portion of the file contains a pointer to the cross reference table and the cross reference table indexes the various page and resource objects. Since the cross reference table is referenced by the trailer, the file can be generated by a one pass operation. In addition, viewing the pages in any order is straightforward. Specifically, in order to view a page, the trailer in the PDF file is first located to obtain the pointer to the cross reference table. Once the cross reference table is located then the index to a particular page can be obtained.

While viewing a PDF file is straightforward, printing with this format is not optimum because the trailer must be located before printing of the file can start. Since the file trailer is at the end of the file, the entire file must be loaded before printing can start. If the file is large, a substantial amount of memory is required. In addition, each page may also contain resource files, such as fonts and bitmaps, which may be referred to in the file at various locations. Therefore, the resources must also be loaded prior to printing.

In order to reduce the time delay caused by the necessity to load the entire file, the Adobe Corporation revised the PDF format into a "linearized" version in which the page data and resources for the first page are located at the beginning of the file so that the first page can be viewed while the remainder of the file is being loaded.

Although effective for viewing, the PDF and linearized PDF formats are not adequate for high speed production printing, where the printer expects a linear stream of page data with resources either in-line or already pre-stored in the printer.

In order to print PDF format and other viewable documents with a production printing system, the objects can be decomposed in the print server which controls the print system in order to generate a serial stream composed of print data objects, resource objects and command objects. For example, one prior art method of printing PDF objects is to transform the PDF format document into a POSTSCRIPT® format document and then print the POSTSCRIPT® format document.

However, high-speed production printing also requires a printing system that can efficiently and reliably handle multiple sequential print jobs; the high-speed printer typically used in such systems can have pages from several print jobs in its paper path at one time. Error recovery, operator repositioning and resource management are important in this environment. To enable printing-system-directed recovery and operator repositioning, a conversational, bi-directional printing data stream is needed. Since neither the PDF format nor the POSTSCRIPT® format was designed for a production printing system, they do not incorporate any of the necessary mechanisms to carry on the two-way communication between a printer and a printer server that is necessary to manage high speed production printing operations. In some printing systems the print data, resource and command objects are sent from the print server to a printer by means of a containerized data stream. This containerized data stream can be used to transmit the serial stream composed of print data objects, resource objects and command objects from the print server to the printer, but no mechanism exists for conveying information from the printer to the print server.

Accordingly, it is desirable to convert files which are originally formatted in various different formats, such PDF formats, into a print stream which is efficient for production printing and which supports a bi-directional command and data flow between a production printer and a print system.

According to one aspect of the invention there is provided apparatus for conveying printer information to printing apparatus which controls the printer in a system where the printing apparatus communicates with the printer by means of a bi-directional containerized data stream, the printer including at least one predefined station defining a point in the printing process, the apparatus comprising: means in the printer for identifying pages located at the at least one predefined printer station; and a reply mechanism which inserts a reply object into the containerized data stream which conveys the reply object from the printer to the printing apparatus, the reply object including data which includes the page identified by the identifying mechanism.

Other aspects of the invention are defined in the appended claims.

In accordance with the embodiment described below, a containerized data stream is used to transmit the print data objects, resource objects and command objects from the print server to the printer and a special reply container is used to convey information from the printer to the print system. The reply container includes sufficient information to indicate the status of page information at several printer locations and may include error messages generated by the page rendering apparatus.

In a preferred embodiment, the reply object includes a dictionary which has entries keyed to various printer stations and a code which identifies the print job and page at the station when the reply container is generated.

An embodiment of the invention will now be described, by way of example only, with reference to the accompanying drawings in which:
Figure 1 illustrates the system architecture for a conventional exemplary computer system on which the preferred embodiment of the invention can be implemented;
Figure 2 is a schematic drawing of an illustrative production printing system which uses a bi-directional data stream between the print server and the printer operating in accordance with the principles of the invention;
Figure 3 shows a production printer illustrating the various stations at which pages for multiple print jobs could be located at a particular time;
Figure 4 is a schematic diagram illustrating the internal structure of a conventional PDF file;
Figure 5 is a flowchart generally showing the steps for viewing and printing pages in a PDF file;
Figure 6 is a schematic diagram illustrating the internal structure of a conventional linearized PDF file;
Figure 7 is a schematic diagram of a typical print data stream used in a production printing system;
Figure 8 is a schematic diagram illustrating a bi-directional data stream used in an AFP printing system;
Figure 9 is an illustrative reply object constructed in accordance with the principles of the present invention;
Figure 10 is a flowchart which illustrates the steps involved in operator repositioning of a print document with pages located at a given printer station; and
Figure 11 is a flowchart which illustrates the steps involved in paper jam recovery of a print data stream.

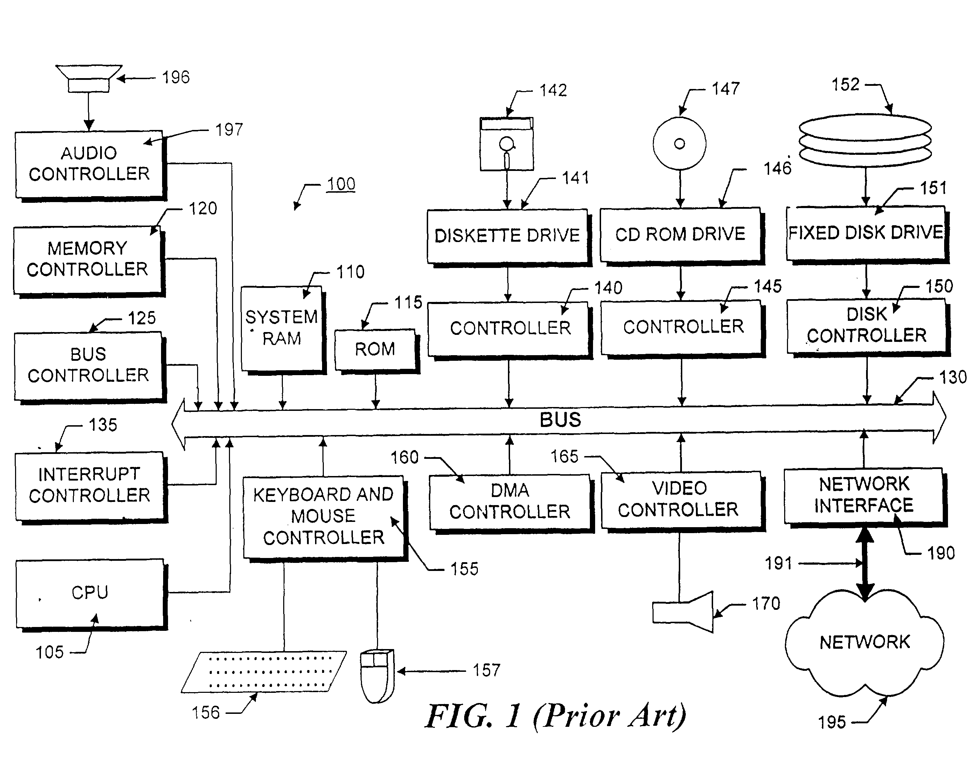

Figure 1 illustrates the system architecture for an exemplary client computer 100, such as an IBM THINKPAD 701® computer, on which the disclosed printing system can be implemented. The exemplary computer system of Figure 1 is discussed only for descriptive purposes, however, and should not be considered a limitation of the invention. Although the description below may refer to terms commonly used in describing particular computer systems, the described concepts apply equally to other computer systems, including systems having architectures that are dissimilar to that shown in Figure 1.

The client computer 100 includes a central processing unit (CPU) 105, which may include a conventional microprocessor, random access memory (RAM) 110 for temporary storage of information, and read only memory (ROM) 115 for permanent storage of information. A memory controller 120 is provided for controlling system RAM 110. A bus controller 125 is provided for controlling bus 130, and an interrupt controller 135 is used for receiving and processing various interrupt signals from the other system components.

Mass storage may be provided by diskette 142, CD-ROM 147, or hard disk 152. Data and software may be exchanged with client computer 100 via removable media, such as diskette 142 and CD-ROM 147. Diskette 142 is insertable into diskette drive 141, which is connected to bus 130 by controller 140. Similarly, CD-ROM 147 is insertable into CD-ROM drive 146, which is connected to bus 130 by controller 145. -Finally, the hard disk 152 is part of a fixed disk drive 151, which is connected to bus 130 by controller 150.

User input to the client computer 100 may be provided by a number of devices. For example, a keyboard 156 and a mouse 157 may be connected to bus 130 by keyboard and mouse controller 155. An audio transducer 196, which may act as both a microphone and a speaker, is connected to bus 130 by audio controller 197. It should be obvious to those reasonably skilled in the art that other input devices, such as a pen and/or tablet and a microphone for voice input, may be connected to client computer 100 through bus 130 and an appropriate controller. DMA controller 160 is provided for performing direct memory access to system RAM 110. A visual display is generated by a video controller 165, which controls video display 170.

Client computer 100 also includes a network adapter 190 that allows the client computer 100 to be interconnected to a network 195 via a bus 191. The network 195, which may be a local area network (LAN), a wide area network (WAN), or the Internet, may utilize general purpose communication lines that interconnect a plurality of network devices.

Client computer system 100 generally is controlled and coordinated by operating system software, such as the WINDOWS 95® operating system (available from Microsoft Corp., Redmond, WA) or WINDOWS NT® operating systems (available from Microsoft Corp., Redmond, WA) or the AIX® operating system (available from International Business Machines Corporation, Armonk, New York.) Among other computer system control functions, the operating system controls allocation of system resources and performs tasks such as process scheduling, memory management, networking and I/O services.

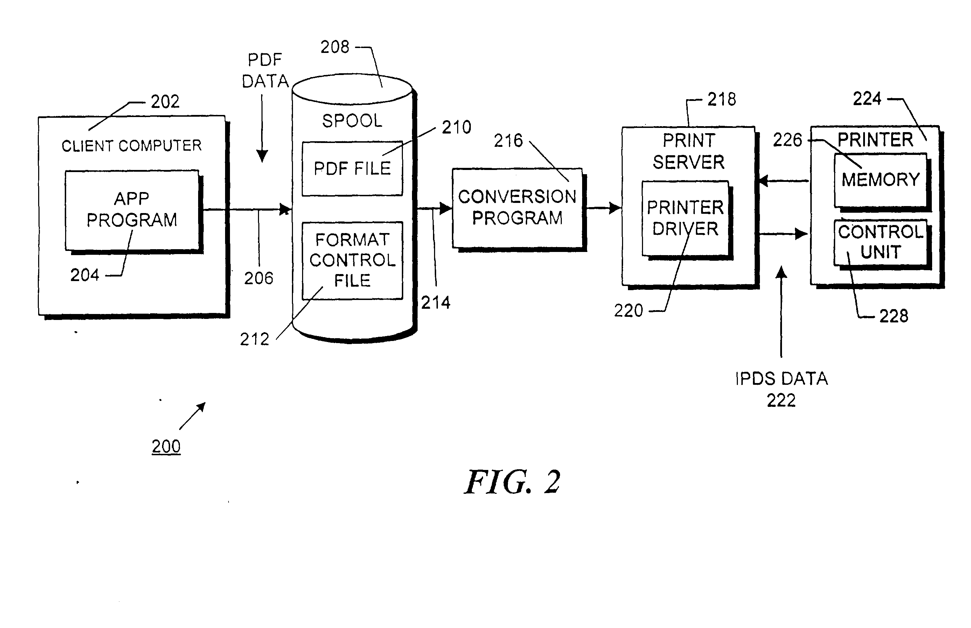

Figure 2 illustrates a production printing system 200 for printing a viewable document produced by an application program 204 on a client computer 202. The client computer 202 may be a conventional personal computer, such as that described above. The application program 204 running on the computer 202 generates a viewable data stream 206, such as a PDF file, that contains page description information.

The file 210 is stored in spool 208. Resources used for viewing each page would also be carried in the actual file and stored in the spool 208. The spool 208 both stores and spools the viewable file 206 from the application program 204 in a PDF file 210. Spool 208 may also store other information, such as formatting control information 212, that can be used to perform additional formatting on the print data, after it has been converted to a print stream. Such additional formatting may, for example, be "n-up" formatting or some similar processing which is performed on the data stream prior to printing.

The spooled output data stream 214 is transmitted to a conversion program 216 which generates an output data stream which is a formatted, platform, device and resolution independent, logical description of the print document. The conversion program 216, which will be further described in detail below, generates a logical description of the document with references to resource information that is necessary to print the document pages. For example, such a logical description of a data stream utilized for printing in a production printing system, such as the AFP system, can be the aforementioned MO:DCA file format. Other file formats can also be used.

A print server 218 that converts the device-independent print specifications to a device specific data stream by means of a printer driver. In the case where the MO:DCA printing format is used, the resulting data stream 222 called an Intelligent Printer Data Stream™ (IPDS™, trademark of IBM Corporation, Armonk, New York) is sent to the printer 224.

Printer 224 has a control unit 228 with which print server 218 can communicate and an internal memory 226. The communication between the print server 218 and the printer is bi-directional. For example, print server 218 may inquire of printer 224 whether a particular resource, such as a font, is resident in the printer memory 226. If the resource is not present, print server 218 can retrieve the font from a resource database and download it using data stream 222 into printer memory 226. The resource will then be available for future use. Subsequently, when print data that refers to the downloaded resource is received by the printer 224, the printer 224 will combine the resource with the data and provide the combination to a conventional Rasterizing Image Processor (called a "RIP", not shown in Figure 2) which converts the data into a printable graphic image.

The print data is typically organized into print jobs, each of which comprises one or more pages and is an independent entity. Print server 218 also generates a job ID for each print job and sends the job ID to the printer 224 in a command sequence that precedes the first page of each job. The pages in a job are identified by a page ID which may be derived from the print objects which comprise the print data. A page ID is sent from the print server 218 to the printer 224 in a command which precedes the page data. When the printer 224 receives the current job ID and the current page ID, it saves this information in the internal memory 226 in an internal record which corresponds to the medium (for example, paper sheet) on which the information will be printed. As the medium travels through the printer 224, the job ID and page ID information travel with it.

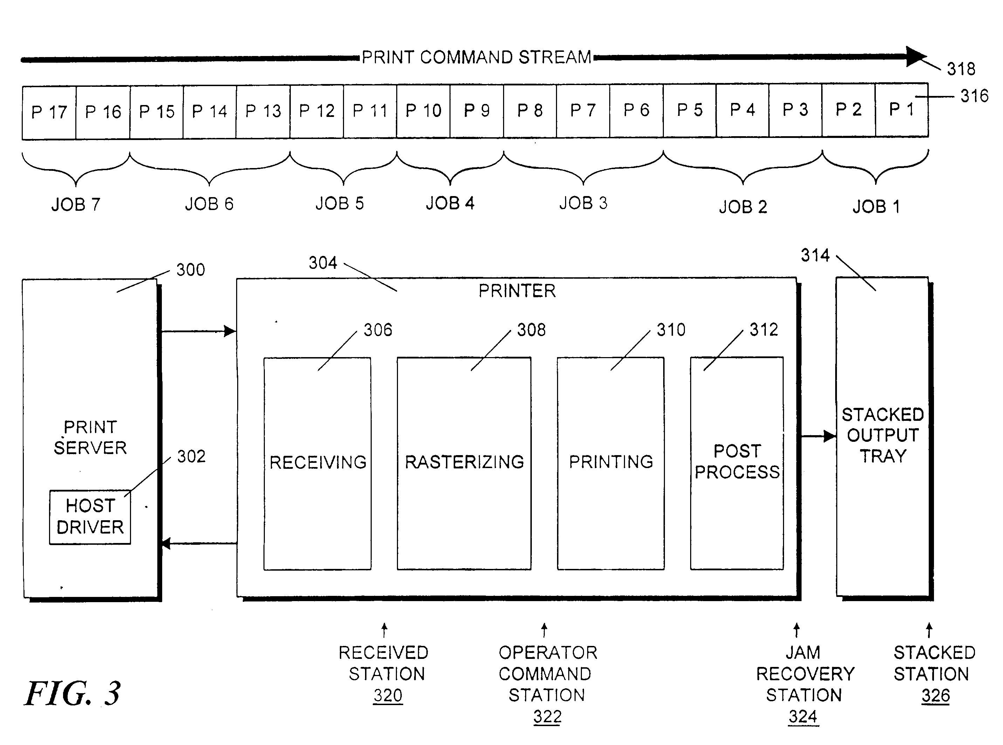

Figure 3 also illustrates several defined points or "stations" in the printing process which points are useful locations for error recovery and operator repositioning purposes. More particularly, a page located at a station has reached a defined point in processing. For example, a page located at the "received station" 320 is the most recent page that has been completely received and processed by the printer prior to image formation.

A page located at the "operator command station" 322 is a page that a printer operator can view. This is the page from which operator commands, such as backspace and forward space, are oriented. A page located at the "jam recovery station" 324 indicates a page that has passed a point in the printer paper path at which jams can no longer occur. When a paper jam occurs, pages before this point must be discarded. Similarly, a page at the "stacked station" 326 is the page that has most recently been stacked in a printer output tray. Since job ID and page ID information follow the physical medium through the printer, there is a record at each printer station of the page most recently received at that station.

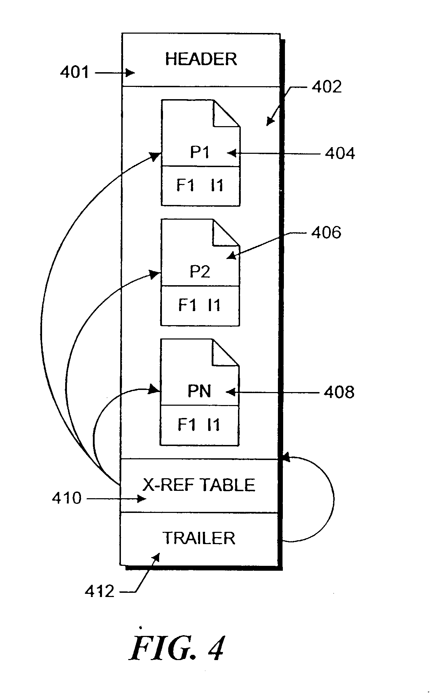

In the description that follows, PDF files will be used as examples of a viewable file format which can be converted to a production print stream with the apparatus and method of the present embodiment. However, it should be understood that other viewable file formats can be similarly converted to generate the desired production print stream. Figure 4 shows, in more detail, the internal organization of a PDF print object 400. The object 400 consists of a header 401, a body 402, a cross reference table 410 and a trailer 412. The trailer 412 identifies the location of the cross reference table 410 and the cross reference table 410 contains indices which refer to page body print data for each of the separate pages located in the object body 402. The data for each page includes the actual page print data P1 and may also include resources such as a font F1 or an image I1. In the particular PDF print object 400 shown in Figure 4, there are three pages, 404, 406 and 408. Each of these pages includes page data, P1, P2 and PN, but also each page requires the same font resource data F1 and the same image I1.

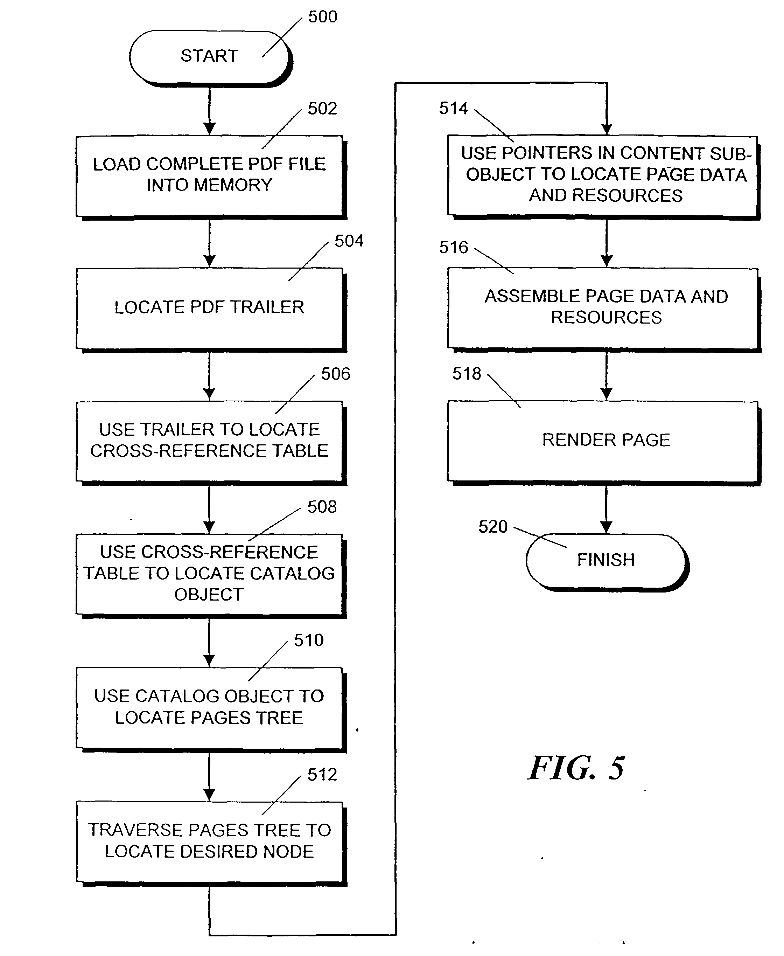

Therefore, in order to display a page of a PDF file on a computer display screen, the display program must perform the subroutine shown in Figure 5. This routine starts in step 500 and proceeds to step 502 where a complete PDF file is loaded into memory. Next, in step 504, the trailer at the end of the file is located. In step 506, the trailer is used to locate the beginning of the cross-reference table.

In step 508, the cross-reference table is used to locate a catalogue object in the cross reference table. The catalog object specifies the location of the pages in the file in various different ways. For example, the catalog object may contain a pages tree which contains nodes with references to the pages that allow the pages to be retrieved in a predetermined order. Each node contains a content sub-object that describes the content of the page and contains pointers to the actual page data. In step 510, the pages tree object in the catalogue object is located. In step 512, the pages tree is traversed until the node representing the page to be displayed is located.

Finally, in step 514, the pointers in the content sub-object contained in the page node are used to locate the page data. The resources required for the page are assembled in step 516 and the page data is rendered in step 518. The routine then finishes in step 520. The sequence shown in Figure 5 is repeated for every page to be reviewed. This allows the pages to be accessed in random order with relative efficiency. For printing purposes, the page ID used in the printing system can be an object number within the PDF file, such as a page ID within the pages tree within the catalog object.

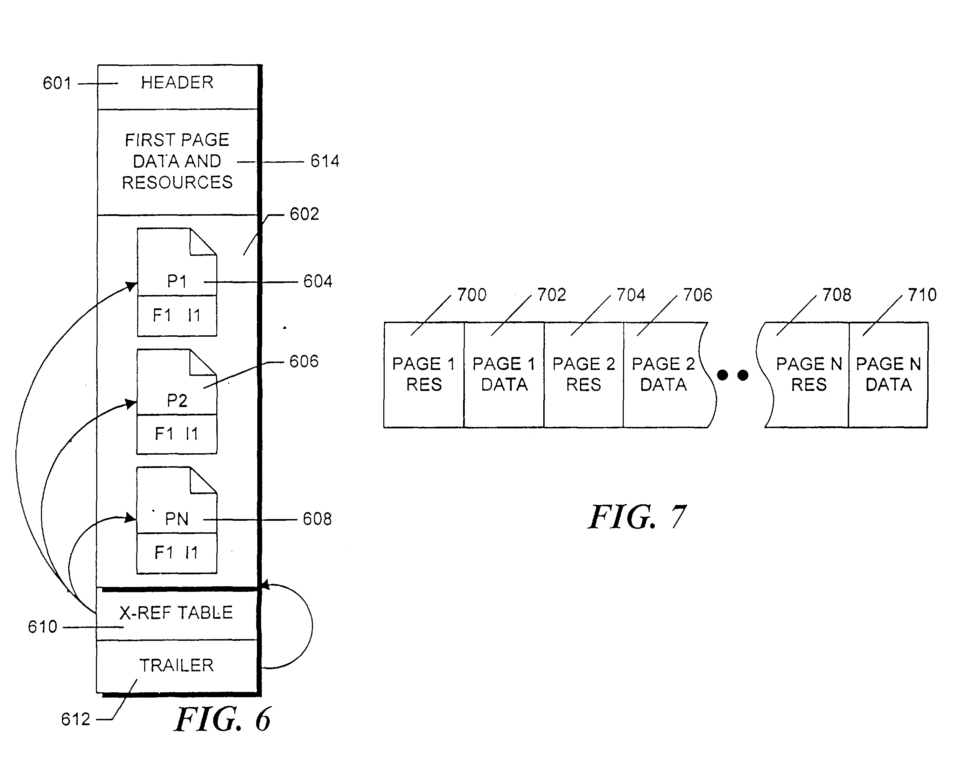

In order to avoid a potentially long delay which can occur during the loading of the entire PDF file in step 502, the PDF file format was modified to that shown in Figure 6 where elements corresponding to elements in Figure 4 have been given like designations. The format illustrated in Figure 6 is called a "linearized page description format". In essence, the PDF format is modified so that all of the information required to render the first page is located at the front of the file as indicated at element 614. The remainder of the file is unchanged from the unmodified PDF format. Therefore, when the linearized page description format is used, the first page can be rendered while the rest of the file is being loaded.

The problem with the PDF format and the linearized PDF format is that neither is well suited to the printing of pages in a high speed print production environment where rendering speed and recovery are critical, for example, in the system shown in Figure 2. A high-speed production print data stream, which is required for such a system, is illustrated in Figure 7. In particular, the print data stream must be constructed such that the printer can begin printing as soon as it receives data for the first page. The data stream must also be constructed so that the printer can continue printing page-by-page without ever being required, before printing, to process data located at the end of the data stream. Therefore, the data stream must contain the pages to be printed in strictly sequential order, with the data for each page including the resources, or references to resources, required to print the data for that page. Since some printers can store resources, common resources need not be sent to the printer every time they are referenced. As shown in Figure 7, such a data stream is continuous and consists of the resources 700 for page 1 (if not already loaded), followed by the data 702 for page 1. Next, the data stream consists of the resources 704 for page 2 (if not already loaded), followed by the page data 706 for page 2. The print data stream continues in this manner until the resources 708 for page N are transmitted, followed by the page data 710 for page N.

In addition, the print data stream must provide for full bi-directional "conversations" between the print server and the printer in order to facilitate resource management and error recovery. Such conversations can be used to track information, such as when resources are present in the printer, which pages have been received, and which pages have been printed and stacked. For example, the print data stream must be able to transmit commands from the print server to the printer and transmit acknowledgements generated by the printer to the print server. This conversational data stream allows the print server to manage the flow of data and resources, pausing to get an acknowledgement from the printer as required.

Acknowledgements generated by the printer can contain an indication that a print server command was received by the printer and is acceptable for processing and may include specific information requested from the printer by the print server. Negative acknowledgements generated by the printer indicate that some error occurred during printing. When this happens, the conversation between the printer and the print server provides for error recovery and resynchronization of the printing process between the printer and the print server.

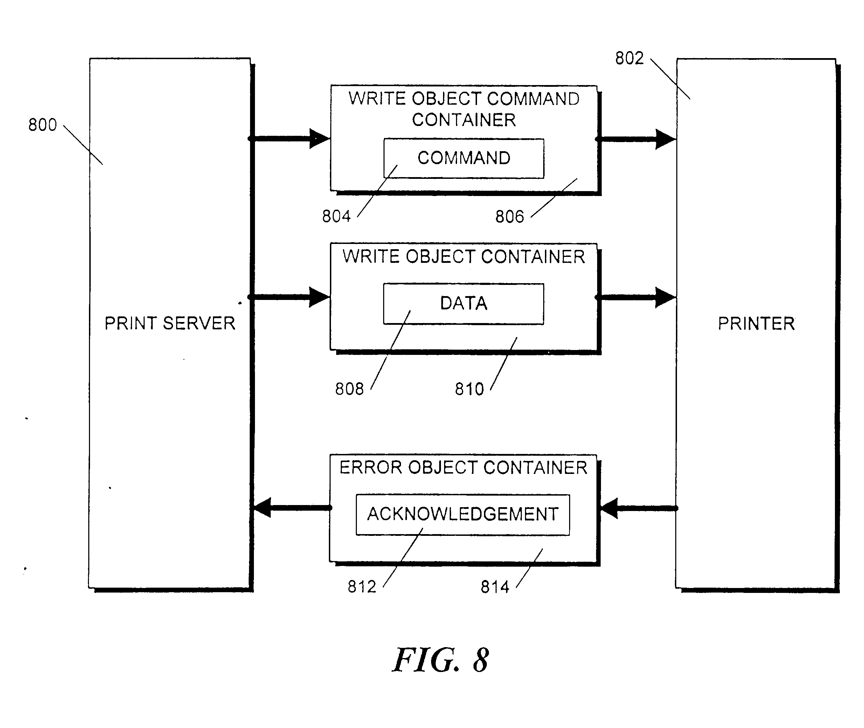

Both the resources and the page data can be sent from the print server to the printer using a "containerized" data stream. For example, in the AFP production printing system described above, two types of containers are used to transmit information from the print server to the printer. One of these containers is called a "Write Object Command Container". This type of container contains commands and control information that are sent from the print server to the printer. Such an arrangement is illustrated in Figure 8 where write object command container 806 carries a command object 804 from print server 800 to printer 802.

A similar type of object 810, called a "write object container", may be used to transfer PDF resource and data objects 808 from the print server 800 to the printer 802. When a container object is used, the underlying data stream is not sensitive to the type of data. The data stream simply carries the data object in the container-object from the print server to the printer. Similarly, an object called a "reply object container", 814, can be used to convey a reply object 812 from the printer 802 to the print server 800. The write object command containers and the write object containers together form a bi-directional data stream called an "Intelligent Printer Data Stream" or IPDS.

The reply object 812 is a data structure that is used to provide information about the status of a particular print job being processed by the system. Contained within the object 812 is a set of station content keys which identify a page currently at each of the defined printer stations. Some reply objects 812 may also contain the text of error messages for PDF page errors or PDF resource errors that were discovered while the printer was rasterizing the page or resource.

When such a reply object is used in the printing system, the print server 800 can request a current reply object at any time, and the printer 802 will return a reply object 812 containing the current station contents before accepting any more resources or page data. When the printer 802 detects an error in a resource or page data, the printer 802 can notify the print server 800 that an error has occurred, and can return a reply object 812 containing the current station contents and text of the error.

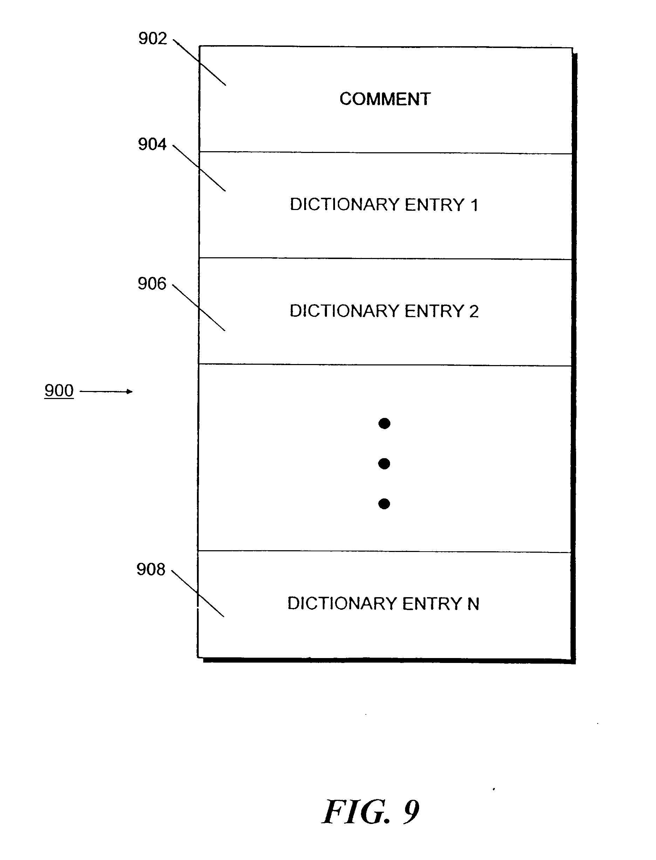

The content of an illustrative printer reply object is shown in Figure 9. The object 900 begins with a comment line 902 which indicates information concerning the underlying PDF object, for example, the revision number. The comment is followed by a dictionary containing a plurality of entries 904 - 908 which provide information identifying pages at each of the defined printer stations. An optional error message 910 (not shown) may also be provided which indicates the cause of an error detected by the printer.

In accordance with one illustrative embodiment, the print server 800 assigns a unique job ID (for example, an integer) to each PDF file that is sent to the printer 802. Each page within the PDF file is assigned a page ID. In this embodiment, the comment field 902 is designated by a "%" sign and might contain the version of the PDF language specification on which the PDF file is based. For example, the content of such a comment field might be "%PRO-1.2", where the revision number (1.2) corresponds to the version of the PDF language specification on which the PDF file is based.

Each dictionary entry consists of a key and a value. The key identifies one of the printer stations and the corresponding value contains indirect references to the current job ID and page ID values at the printer station. For example, the dictionary might contain the following entries:

| **Key** | **Type** | **Semantics** |
|---|---|---|
| Type | Name | (Required) Object type. Always **StationContent.** |
| RSCJID | Integer | (Required; must be indirect reference) Received station content job ID. |
| RSCPID | Dictionary | (Required; must be indirect reference) Received station content page ID. |
| OSCJID | Integer | (Required; must be indirect reference) Operator-command station content job ID. |
| OSCPID | Dictionary | (Required; must be indirect reference) Operator-command station content page ID. |
| JSCJID | Integer | (Required; must be indirect reference) Jam-recovery station content job ID. |
| JSCPID | Dictionary | (Required; must be indirect reference) Jam-recovery station content page ID. |
| SSCJID | Integer | (Required; must be indirect reference) Stacked station content job ID. |
| SSCPID | Dictionary | (Required; must be indirect reference (Stacked station content page ID. |
| ErrorMessage | String | (Optional, can occur multiple times) Text of an error message for an error on the page after the page at the received station. |

Using the above dictionary entry format the following is an example of a reply object. In this example, the page within job 1 whose object ID is 102 is at the stacked station; the page within job 1 whose object ID is 14 is at the jam-recovery station; the page within job 2 whose object ID is 75 is at the operator-command station; and the page within job 2 whose object ID 12 is at the received station. The error message refers to the page currently being received at the printer; that is, the next page after the page at the received station.

Note that a dictionary is contained between the << and >> characters. Each entry within the dictionary is a object whose first element is a key (the name of the object) and whose second element is a value. Names begin with a "/" character , strings (such as the error message) are enclosed in parenthesis. The values of the form "2 0 R" are indirect references to pages and print jobs; the first number is an object number, the second number is a generation number.

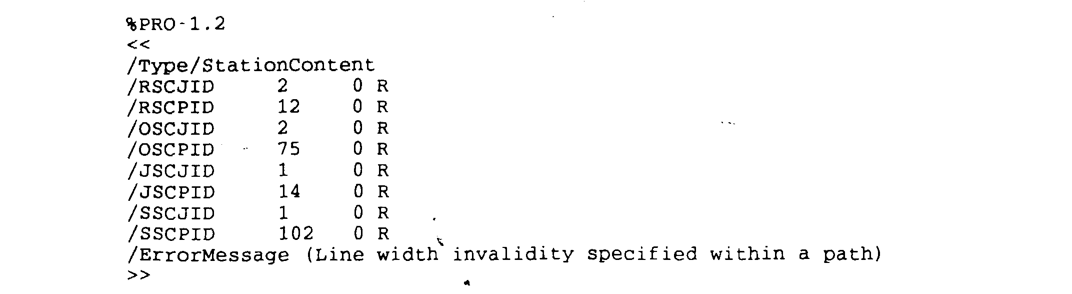

In addition to including the text of error messages in a reply object as discussed above, it is also possible to construct a rolling error log in the printer 802 which contains the actual error text from the object rasterizers. With such an arrangement, each error message has an error reference number in the log and the error reference number is returned in the reply object or a conventional negative acknowledgement in the IPDS data stream. When the print server 800 receives the error reference number, a query command can be used to read messages from the error log (for a particular error message or a range of error messages.) In the query command an encoding tag identifies the encoding scheme and code page used for the message text. The printer 802 may also provide an identification of the object type that generated the message. Additionally, for some kind of objects, an error category indicator can be provided.

The reply object allows both error reporting and printer management function. For example, the reply object can be used to allow a host driver 302 (Figure 3) which is printing a print command stream to restart the printer on a given page (the command stream can contain PDF objects within pages.) Alternatively, the host driver can start on a particular page and print a range of pages, interrupt a job and restart later, backspace or forwardspace a given number of pages or cancel a job.

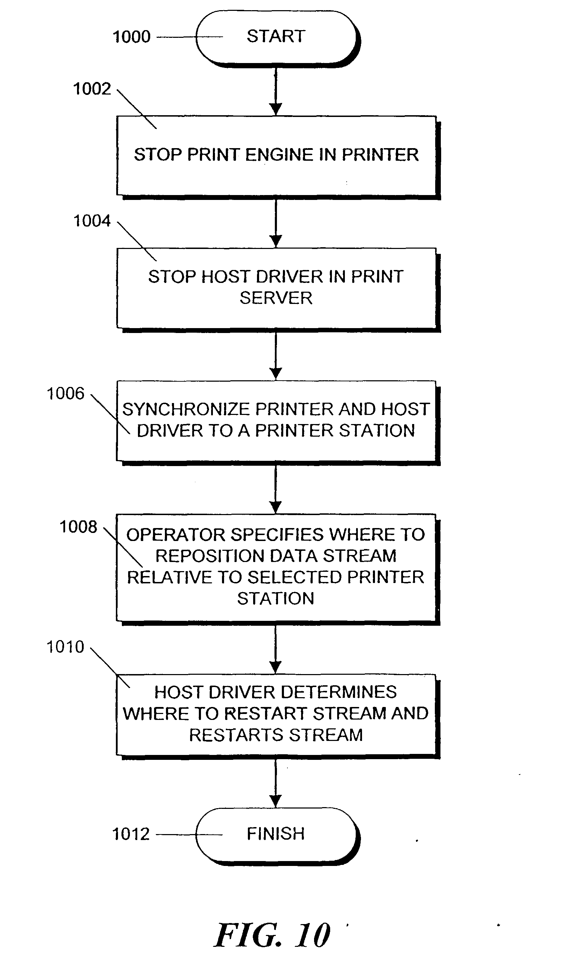

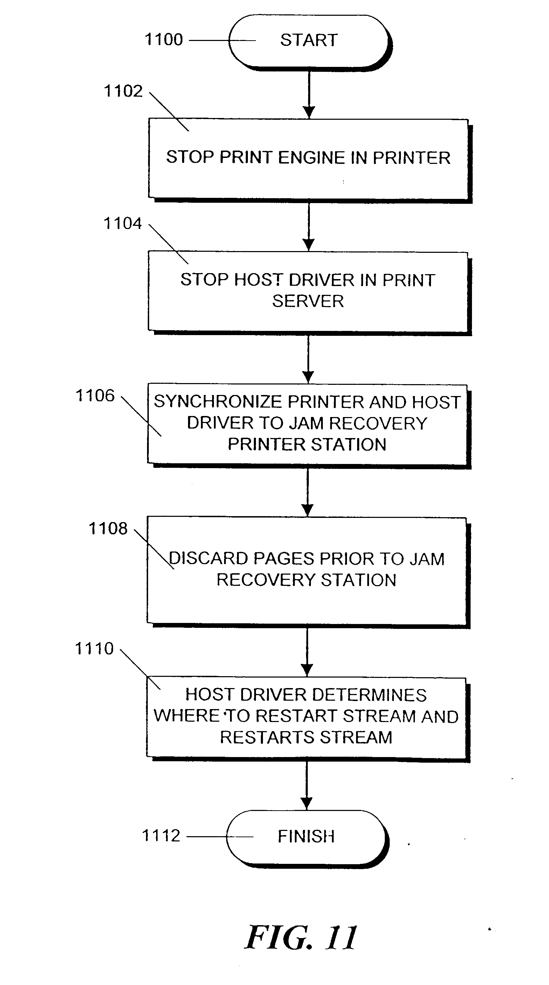

The steps carried out in order to perform these functions are illustrated in Figures 10 and 11 which detail an operator repositioning routine and'a paper jam recovery routine, respectively. In order to effectively synchronize the host driver in the print server with the print engine in the printer, the host driver must keep page and job information for pages at the defined stations, preferably using job and page IDs which are generated at the print server as described above. The operator repositioning routine is illustrated in Figure 10 and begins in step 1000. The routine proceeds to step 1002 where the print engine in the printer is stopped. In step 1004, the host driver in the print server is stopped. Next, in step 1006, the printer and the host driver are synchronized to a selected one of the printer stations. This synchronization can be accomplished by using the host driver to request a reply object from the printer. The requested reply object identifies the current page at each printer station so that both the host driver and the print engine can be started at the same page.

The operator then specifies where to reposition the restarting point in the stream relative to the station as shown in step 1008. In step 1010, the host driver then determines where to restart the stream so that the environment is properly restored. In this process the driver determines the proper printing resources (such as fonts) which are needed to restart and the printer control commands (such as sheet layout, landscape or portrait and post-processing commands (such as staple) which must be reissued. The driver then restarts the stream at the new point and the routine finishes in step 1012.

A similar routine used to restart a printer to recover from a paper jam is illustrated in Figure 11 and begins in step 1100. The routine proceeds to step 1102 where the print engine in the printer is stopped. In step 1104, the host driver in the print server is stopped. Next, in step 1106, the printer and the host driver are synchronized to the jam recovery station 324 (Figure 3). This synchronization can also be accomplished by using the host driver to request a reply object from the printer. Since the reply object identifies pages at all printer stations, the host driver receives enough information to discard all pages which have been received at the printer and have not reached the jam recovery station as set forth in step 1108. Using the job and page ID information, the host driver determines which jobs need to be restarted and restarts the print stream in the proper location as set forth in step 1110. The routine then finishes in step 1112.

A software implementation of the above-described embodiment may comprise a series of computer instructions either fixed on a tangible medium, such as a computer readable media, e.g. diskette 142, CD-ROM 147, ROM 115, or fixed disk 152 of Figure 1, or transmittable to a computer system, via a modem or other interface device, such as communications adapter 190 connected to the network 195 over a medium 191. Medium 191 can be either a tangible medium, including but not limited to optical or analog communications lines, or may be implemented with wireless techniques, including but not limited to microwave, infrared or other transmission techniques. It may also be the Internet. The series of computer instructions embodies all or part of the functionality previously described herein with respect to the invention. Those skilled in the art will appreciate that such computer instructions can be written in a number of programming languages for use with many computer architectures or operating systems. Further, such instructions may be stored using any memory technology, present or future, including, but not limited to, semiconductor, magnetic, optical or other memory devices, or transmitted using any communications technology, present or future, including but not limited to optical, infrared, microwave, or other transmission technologies. It is contemplated that such a computer program product may be distributed as a removable media with accompanying printed or electronic documentation, e.g., shrink wrapped software, preloaded with a computer system, e.g., on system ROM or fixed disk, or distributed from a server or electronic bulletin board over a network, e.g., the Internet or World Wide Web.

Although an exemplary embodiment of the invention has been disclosed, it will be apparent to those skilled in the art that various changes and modifications can be made which will achieve some of the advantages of the invention without departing from the scope of the invention as defined by the appended claims. For example, it will be obvious to those reasonably skilled in the art that the disclosed method and apparatus for conveying information between a print server and a printer can operate with printing systems other than the disclosed AFP system and with other data streams that the disclosed IPDS data stream.. Further, the methods of the invention may be achieved in either all software implementations, using the appropriate processor instructions, or in hybrid implementations which utilize a combination of hardware logic and software logic to achieve the same results. In addition, aspects such as the size of memory, the specific configuration of logic and/or instructions utilized to achieve a particular function, as well as other modifications to the inventive concept are intended to be covered by the appended claims.

## Claims

1. Apparatus for conveying printer information to printing apparatus which controls the printer in a system where the printing apparatus communicates with the printer by means of a bi-directional containerized data stream, the printer including at least one predefined station defining a point in the printing process, the apparatus comprising:
a means in the printer for identifying pages located at the at least one predefined printer station; and
a reply mechanism which inserts a reply object into the containerized data stream which conveys the reply object from the printer to the printing apparatus, the reply object including data which includes the page identified by the identifying mechanism.

2. Apparatus according to claim 1 wherein the reply object includes a dictionary with a plurality of entries, wherein each entry includes information identifying a page at a particular printer station of a plurality of printer stations in the printer.

3. Apparatus according to claim 2 wherein each entry includes information identifying a print job at the particular printer station.

4. Apparatus according to claim 2 wherein each dictionary entry includes a key which is related to the particular printer station and a value which identifies a print job and a page within the identified print job.

5. Apparatus according to any preceding claim wherein the reply object includes information identifying errors which occur in the printer.

6. Apparatus according to claim 5 wherein the error identifying information comprises error text generated by the printer.

7. Apparatus according to claim 5 wherein the printer comprises a storage for storing error text generated by the printer and wherein the reply object includes an error code referencing the error text.

8. Apparatus according to claim 7 further comprising means for generating a query to determine the error text stored in the printer storage.

9. Apparatus according to claim 1 wherein the page identifying mechanism in the printer comprises a page identification located at each defined printer station.

10. Apparatus according to claim 1 further comprising a request mechanism in the printing apparatus which generates a reply object request and a mechanism in the printer which receives the reply object request, generates a reply object and returns the generated reply object to the printing apparatus.

11. Apparatus for enabling the transfer of information needed to manage high-speed production printing within a bi-directional conversational data stream carrying print data between a printer and printing apparatus which controls the printer, the apparatus comprising:
a mechanism in the printing apparatus which inserts page identification information into the data stream which page identification information travels with print data for a page;
a reply mechanism in the printer which reads the page identification information of page data located at at least one predefined printer station in the printer; and
a return mechanism which is responsive to a reply request generated by the printing apparatus for conveying the page identification information read by the reply mechanism from the printer to the printing apparatus.

12. Apparatus according to claim 11 wherein the page identification information includes information identifying a print job and information identifying a page within the print job.

13. Apparatus according to claim 11 wherein page identification information for a page is inserted into the data stream preceding print data for the page.

14. A method for conveying printer information to printing apparatus which controls the printer in a system where the printing apparatus communicates with the printer by means of a bi-directional containerized data stream, the method comprising the steps of:
(a) identifying pages located in the printer in at least one predefined printer station of the printer;
(b) constructing a reply object including data which includes the page identified by the identifying mechanism; and
(c) inserting the reply object into the containerized data stream which conveys the reply object from the printer to the printing apparatus.

15. A method according to claim 14 wherein step (b) comprises the step of:
(b1) constructing the reply object with a dictionary having a plurality of entries, wherein each entry includes information identifying a page at a particular printer station.

16. A method according to claim 15 wherein each dictionary entry further includes information identifying a print job at a particular printer station.

17. A method according to claim 15 wherein each dictionary entry includes a key which is related to a particular printer station and a value which identifies a print job and a page within the identified print job.

18. A method according to claim 14 wherein step (b) comprises the step of:
(b2) constructing a reply object with information identifying errors which occur in the printer.

19. A method according to claim 18 wherein the error identifying information comprises error text generated by the printer.

20. A method according to claim 14 wherein the printer comprises a storage for storing error text generated by the printer and wherein step (b) comprises the step of:
(b3) constructing a reply object with an error code referencing the error text.

21. A method according to claim 20 further comprising the step of:
(d) generating a query to determine the error text stored in the printer storage.

22. A method according to claim 14 wherein step (a) comprises the step of:
(a1) locating a page identifying mechanism at each defined printer station.

23. A method according to claim 14 further comprising the steps of:
(a) generating a reply object request in the printing apparatus;
(b) receiving the reply object request in the printer; and
(c) generating a reply object and returning the generated reply object to the printing apparatus.

24. A method for repositioning a print data stream under operator control in a printing apparatus having a print server with a host driver which communicates with a print engine in a printer by means of a bi-directional conversational data stream, the method comprising the steps of:
(a) stopping the host driver and the print engine;
(b) requesting information from the printer identifying a page at a selected printer station;
(c) synchronizing the host driver and the printer to the selected printer station;
(d) repositioning the print data stream relative to the selected printer station under operator control;
(e) using the host driver to determine a location in the print data stream at which to restart the print data stream; and
(f) restarting the print data stream at the determined location.

25. A method according to claim 24 wherein step (b) comprises the steps of:
(b1) sending a reply object request from the print server to the printer; and
(b2) returning a reply object from the printer to the print server, the reply object identifying a page at the selected printer station.

26. A method according to claim 25 wherein the reply object identifies pages at a plurality of selected printer stations.

27. A method according to claim 24 further comprising the step of:
(g) inserting into the print data stream page identification information for at least one page in the print data stream.

28. A method according to claim 27 wherein step (g) comprises the step of: (g1) inserting into the print data stream page identification information for each page in the print data stream.

29. A method for recovering from a paper jam in a printing apparatus having a print server with a host driver which sends a print data stream to a print engine in a printer by means of a bi-directional conversational data stream, the method comprising the steps of:
(a) stopping the host driver and the print engine;
(b) requesting information from the printer identifying a page at a pre-defined jam recovery printer station;
(c) synchronizing the host driver and the printer to the jam recovery printer station;
(d) repositioning the print data stream relative to the jam recovery printer station;
(e) using the host driver to determine a location in the print data stream at which to restart the print data stream; and
(f) restarting the print data stream at the determined location.

30. A method according to claim 29 wherein step (b) comprises the steps of:
(b1) sending a reply object request from the print server to the printer; and
(b2) returning a reply object from the printer to the print server, the reply object identifying a page at the jam recovery printer station.

31. A method according to claim 30 wherein the reply object identifies pages at a plurality of selected printer stations.

32. A method according to claim 29 further comprising the step of:
(g) inserting into the print data stream page identification information for at least one page in the print data stream.

33. A method according to claim 32 wherein step (g) comprises the step of:
(g1) inserting into the print data stream page identification information for each page in the print data stream.

34. A computer program product including program code for carrying out the method as defined in any of claims 14 to 33.
